# FASCICULE DE BREVET EUROPEEN

(11) **EP 3 019 327 B1**
(45) Date de publication et mention de la délivrance du brevet: **21.06.2017**
(21) Numéro de dépôt: 14736805.4
(22) Date de dépôt: 08.07.2014
(51) Int. Cl.: B29C 49/42, B29C 49/78, B29C 49/16, B29C 49/18, B29C 49/06, B29C 49/12

(54) **PROCEDE ET POSTE DE FORMAGE DE RECIPIENTS COMPORTANT DES ETAPES DE RECYCLAGE DU FLUIDE DE SOUFFLAGE AU MOYEN D'UN RESERVOIR**
VERFAHREN UND INSTALLATION ZUR HERSTELLUNG VON BEHÄLTERN MIT SCHRITTEN ZUR WIEDERVERWERTUNG DER BLASFORMFLÜSSIGKEIT ANHAND EINES GEFÄSSES
METHOD AND INSTALLATION FOR FORMING CONTAINERS COMPRISING STEPS OF RECYCLING THE BLOW-MOULDING FLUID BY MEANS OF A VESSEL

(30) Priorité: 09.07.2013 FR 1356735
(43) Date de publication de la demande: 18.05.2016
(73) Titulaire: Sidel Participations, 76930 Octeville-sur-Mer (FR)
(72) Inventeur: BARON, Alain, F-76930 Octeville sur Mer (FR)
(74) Mandataire: Grassin d'Alphonse, Emmanuel Jean Marie
(86) Numéro de dépôt international: PCT/EP2014/064552
(87) Numéro de publication internationale: WO 2015/004109

(56) Documents cités:
- EP-A2- 1 974 892
- WO-A1-2007/023349
- GR-A- 96 100 152
- JP-A- H05 309 726
- US-A1- 2008 191 394

## Description

L'invention concerne un procédé de formage en série, notamment par soufflage ou par étirage-soufflage, de récipients en matériau thermoplastique par injection d'un fluide de soufflage sous pression dans des préformes préchauffées jusqu'à une pression "Pmax" maximale de manière à conformer chaque préforme en récipient.

L'invention concerne plus particulièrement un procédé de formage en série, notamment par soufflage ou par étirage-soufflage, de récipients en matériau thermoplastique par injection d'un fluide de soufflage sous pression dans des préformes préchauffées jusqu'à une pression maximale de manière à conformer chaque préforme en récipient, le procédé comportant :
- au moins une étape de récupération de fluide de soufflage sous pression contenu dans un récipient fini à l'issue de son formage par remplissage d'un réservoir jusqu'à une première pression d'équilibre entre le réservoir et le récipient fini, dite pression de stockage ;
- au moins une étape ultérieure d'utilisation du fluide de soufflage récupéré, par injection du fluide de soufflage contenu dans le réservoir dans un récipient en cours de formage, jusqu'à obtention d'une deuxième pression d'équilibre entre le réservoir et le récipient, dite pression de déstockage ;
la pression de stockage dudit réservoir étant sensiblement plus élevée que la pression de déstockage dudit réservoir.

Il est connu de fabriquer des récipients à partir de préformes en matériau thermoplastique qui sont chauffées à une température de transition vitreuse. La fabrication est réalisée par application d'un procédé de formage, par exemple par soufflage ou par étirage-soufflage.

Lors d'une première phase "P1" de formage du procédé, la préforme chaude est insérée dans un moule d'un poste de formage, puis un fluide de soufflage, par exemple de l'air, comprimé à haute pression "Pmax", par exemple jusqu'à 27 bars, est injecté dans la préforme. Le moule comporte une cavité conformée à l'empreinte du récipient fini à obtenir. La pression du fluide de soufflage déforme les parois de la préforme pour les plaquer contre l'empreinte du moule.

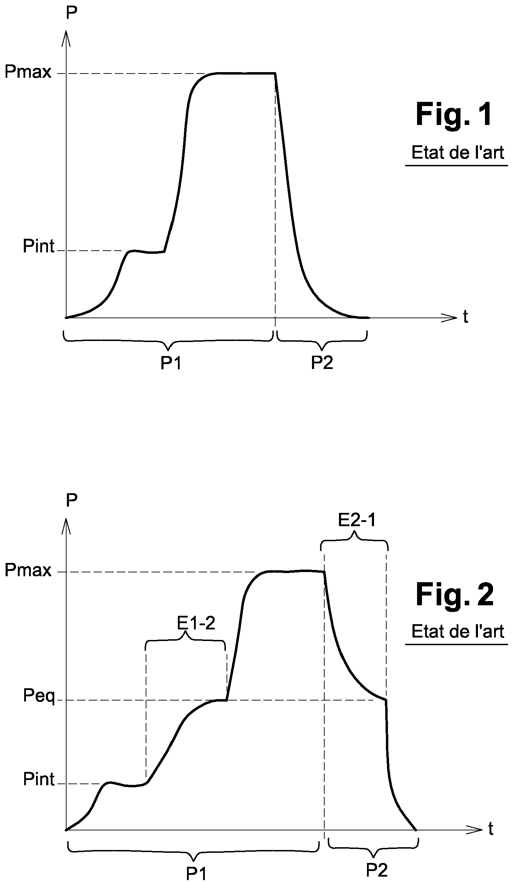

L'augmentation de pression dans le récipient est représentée par la courbe de la figure 1. Dans ce mode de réalisation, le fluide de soufflage est comprimé au moyen d'un compresseur qui alimente directement le récipient.

A l'issue de la première phase "P1" de formage, le récipient est rempli de fluide de soufflage sous pression. Avant d'extraire le récipient fini de son moule, la pression à l'intérieur du récipient est abaissée jusqu'à la pression atmosphérique par échappement du fluide de soufflage qu'il contient lors d'une deuxième phase "P2" d'échappement du procédé de formage.

De tels récipients sont fabriqués en grandes séries par une installation de fabrication de récipients. Une même installation de fabrication comporte généralement plusieurs postes de formage.

La compression du fluide de soufflage consomme beaucoup d'énergie. Afin de diminuer sensiblement la consommation énergétique de l'installation de fabrication, il est connu de récupérer au moins une partie du fluide de soufflage sous pression qui s'échappe du récipient fini lors de la deuxième phase d'échappement.

De manière connue, la récupération du fluide de soufflage est réalisée au moyen d'un réservoir commun de récupération qui est raccordé à chacun des postes de soufflage par l'intermédiaire de vannes de commandes. Le réservoir commun de récupération est ainsi commun à tous les postes de soufflage. Le réservoir commun de récupération présente un volume nettement supérieur au volume d'un récipient fini, par exemple le volume du réservoir commun de récupération est supérieur à dix fois celui d'un récipient fini.

Un procédé connu de mise en oeuvre de cette installation réalisée selon l'état de la technique comporte une première étape "E2-1" de récupération qui intervient au début de la deuxième phase "P2" d'échappement du procédé appliqué à un premier poste de formage. Puis, une étape "E1-2" d'utilisation du fluide de soufflage récupéré lors de la première étape "E1" intervient dans la première phase "P1" de formage du procédé appliqué à un deuxième poste de formage

L'évolution de la pression dans un récipient fabriqué selon un tel procédé est représentée par la courbe de la figure 2. Afin de pouvoir comparer la courbe de pression à celle de la figure 1, la première phase "P1" appliquée au deuxième poste de formage et la deuxième phase "P2" appliquée au premier poste de formage ont été représentées sur la même courbe.

Lors de l'étape "E2-1" de récupération, le réservoir commun de récupération est mis en communication avec le récipient fini obtenu sur le premier poste de formage. La pression du fluide de soufflage contenu dans le récipient est alors supérieure à la pression de fluide de soufflage contenu dans le réservoir commun de récupération. Le fluide de soufflage circule donc depuis le récipient fini vers le réservoir commun de récupération jusqu'à obtention d'une première pression d'équilibre "Peq", dite pression de stockage, entre le réservoir commun de récupération et le récipient.

Lors de l'étape "E1-2" d'utilisation qui intervient dans la première phase "P1" de formage du procédé appliqué au deuxième poste de formage, le réservoir commun de récupération est mis en communication avec un récipient en cours de formage sur le deuxième poste de formage. La pression dans le récipient est alors inférieure à la pression "Peq" de fluide de soufflage contenu dans le réservoir commun de récupération. Le fluide formage circule donc depuis le réservoir commun de récupération vers le récipient en cours de formage, jusqu'à obtention d'une deuxième pression d'équilibre "Peq", dite pression de déstockage, entre le réservoir commun de récupération et la préforme.

Lors de chacune de ces étapes "E1-2" et "E2-1", le volume de fluide de soufflage échangé entre le réservoir commun de récupération et le récipient est négligeable au regard du volume total du réservoir commun de récupération. La variation de pression "Peq" dans le réservoir commun de récupération est donc négligeable, comme cela est illustré à la figure 2.

En outre, l'installation de fabrication comporte plusieurs postes de formage qui sont utilisés successivement de manière cyclique. Ainsi, lorsqu'un premier poste de formage met en oeuvre l'étape "E2-1" de récupération de fluide de soufflage, un deuxième poste de formage met simultanément en oeuvre l'étape "E1-2" d'utilisation du fluide de soufflage récupéré. Le réservoir commun de récupération est ainsi utilisé quasi simultanément pour l'étape "E2-1" de récupération de fluide du premier poste et pour l'étape "E1-2" d'utilisation du deuxième poste. De ce fait, la perte de masse de fluide de soufflage par transfert depuis le réservoir commun de récupération jusqu'au deuxième poste de formage, est compensée par l'arrivée simultanée d'une masse équivalente de fluide de soufflage transférée par le premier poste de formage.

Pour toutes ces raisons, la pression de stockage du réservoir commun de récupération est sensiblement égale à sa pression de déstockage, en d'autres termes, la pression "Peq" de fluide stocké dans le réservoir commun de récupération demeure sensiblement constante lors du fonctionnement de l'installation de formage en régime stabilisé.

Il est à noter que lorsque, l'installation de formage est en cours de transition, par exemple lorsqu'elle redémarre après que le réservoir commun de récupération ait été purgé, il est nécessaire de faire fonctionner l'installation pendant un certain nombre de cycles avant que la pression du réservoir commun de récupération ne se stabilise. La présente invention ne concerne pas un tel régime transitoire, mais un régime de fonctionnement stabilisé pour lequel la pression d'équilibre atteinte par le réservoir commun de récupération est la même pour chaque cycle successif.

Il a été constaté que les installations de formage réalisées selon l'état de la technique présentent plusieurs inconvénients.

Selon un premier inconvénient, le fluide de soufflage récupéré dans le réservoir commun de récupération est généralement utilisé au début de la première phase de formage. Or, il a été constaté que le débit de fluide de soufflage depuis le réservoir commun de récupération vers la préforme est en moyenne plus faible que le débit de fluide issu d'une source de fluide de soufflage comprimé fournie par un compresseur, comme cela est visible en comparant les figures 1 et 2.

En outre, le débit de fluide diminue très nettement au fur et à mesure que la pression à l'intérieur de la préforme tend vers la pression constante du réservoir commun de récupération.

Ainsi, le temps de fabrication d'un récipient par mise en oeuvre du procédé de formage, avec récupération de fluide de soufflage selon l'état de la technique, est plus important que le temps de fabrication d'un même récipient par un procédé ne faisant pas intervenir la récupération de fluide de soufflage. Les deux courbes des figures 1 et 2 ont été représentées sur une même échelle de temps afin d'illustrer ce constat. L'allongement de la durée du procédé de formage limite la cadence de fabrication des récipients.

Selon un deuxième inconvénient, un procédé de formage avec récupération de fluide selon l'état de la technique présente une efficacité limitée. L'efficacité est définie comme étant le rapport entre :
- l'augmentation de pression dans le récipient réalisée au moyen de fluide de soufflage récupéré ;
- et la pression "Pmax" maximale atteinte dans le récipient à la fin de l'étape de formage.

Il a été notamment constaté qu'un réservoir commun de récupération permet d'atteindre au mieux une efficacité d'environ 50%.

Le document US-A1-2008/191394 décrit un procédé de formage en série de récipients en matériau thermoplastique par injection d'un fluide de soufflage sous pression dans des préformes préchauffées jusqu'à une pression maximale de manière à conformer chaque préforme en récipient, le procédé comportant au moins une étape de récupération de fluide de soufflage sous pression contenu dans un récipient fini à l'issue de son formage par remplissage d'un réservoir jusqu'à une première pression prédéfinie, dite pression de stockage, au moins une étape ultérieure d'utilisation du fluide de soufflage récupéré, par injection du fluide de soufflage contenu dans le réservoir dans un récipient en cours de formage, jusqu'à obtention d'une deuxième pression prédéfinie, dite pression de déstockage; la pression de stockage dudit réservoir étant sensiblement plus élevée que la pression de déstockage dudit réservoir. US-A1-2008/191394 représente un procédé mettant en oeuvre un réservoir de récupération appliqué à un seul poste de formage. Le réservoir de récupération présente un volume dix fois supérieur au volume du récipient à obtenir. Le grand volume du réservoir entraîne une limitation de la vitesse de transfert du fluide de soufflage entre le récipient et le réservoir lorsque la pression du récipient approche de la pression du réservoir. Ainsi, le procédé de formage et le dispositif associé divulgués dans ce document ne sont pas satisfaisant car ils ne permettent pas de former les récipients à une cadence élevée.

Le document WO2007/023349A1 décrit un procédé de soufflage d'un conteneur à partir d'une préforme comprenant une phase de récupération du gaz de soufflage. Le document WO2007/023349 A1 décrit un poste de formage selon le préambule de la revendication 10. L'invention propose un nouveau procédé permettant d'améliorer nettement la durée de l'opération de soufflage tout en améliorant l'efficacité de la récupération du fluide de soufflage. A cet effet, l'invention propose un procédé du type décrit précédemment, caractérisé en ce que la différence de pression entre la pression de stockage et la pression de déstockage de chaque réservoir individuel de récupération est au moins égale à 7% de la pression maximale de fluide de soufflage.

Selon d'autres caractéristiques du procédé :
- le procédé comporte :
   -- plusieurs étapes successives de récupération du fluide de soufflage dudit récipient fini par remplissage successif de réservoirs distincts dont chacun est associé à l'une des étapes de récupération ;
   -- autant d'étapes successives d'utilisation du fluide de soufflage récupéré par injection successive du fluide de soufflage contenu dans chacun desdits réservoirs dans le récipient en cours de formage suivant ;
- la première des étapes d'utilisation est déclenchée après la fin de la dernière des étapes de récupération, et en ce que les réservoirs sont utilisés successivement par chaque étape d'utilisation dans l'ordre inverse de leur remplissage au cours des étapes de récupération ;
- à l'issue de chaque étape de récupération, la pression de stockage du réservoir individuel de récupération associé correspond à la pression de fluide dans le récipient fini au début de l'étape de récupération directement suivante ;
- à l'issue de chaque étape d'utilisation, la pression de déstockage du réservoir individuel de récupération associé correspond à la pression de fluide dans le récipient en cours de formage au début de l'étape d'utilisation directement suivante ;
- la pression de stockage de chaque réservoir est plus élevée d'au moins 1 bar par rapport à la pression de déstockage dudit réservoir ;
- chaque réservoir alimente en fluide de soufflage une unique tuyère d'un poste de formage associé ;
- chaque réservoir est alimenté en fluide de soufflage uniquement par ladite tuyère ;
- le procédé comporte une étape intermédiaire d'augmentation de la pression du fluide de soufflage contenu dans au moins un réservoir par des moyens d'augmentation de la pression, l'étape intermédiaire étant interposée entre l'étape de récupération et l'étape suivant d'utilisation associées audit réservoir.

L'invention propose aussi un poste de formage pour la mise en oeuvre du procédé selon les enseignements de l'invention, pour former un récipient fini d'un volume déterminé à partir d'une préforme plus petite, le poste de formage comportant :
- une tuyère de formage qui est destinée à raccorder au moins une source commandée de fluide de soufflage comprimé à la pression maximale avec la préforme, la tuyère présentant un volume mort déterminé ;
- au moins un réservoir qui est raccordé en dérivation avec la tuyère par l'intermédiaire d'une vanne commandée de récupération associée ;
caractérisé en ce que chaque réservoir est destiné à la mise en oeuvre des étapes associées de récupération et d'utilisation, et en ce que chaque réservoir présente un volume non nul qui est inférieure ou égal à environ cinq fois la somme du volume mort et du volume du récipient fini.

Selon d'autres caractéristiques du poste de formage :
- chaque réservoir est agencé à une distance de moins d'un mètre de la tuyère associée, de préférence moins de 50 centimètres, idéalement moins de 20 cm ;
- au moins un réservoir est intégré à un support de la tuyère ;
- chaque réservoir et son raccordement à la tuyère sont réalisés de manière à favoriser l'écoulement du fluide sans perte d'énergie dans les deux sens ;
- au moins un réservoir présente un volume variable ;
- le réservoir comporte des moyens pour augmenter la pression du fluide de soufflage entre la première étape de récupération et la deuxième étape d'utilisation ;
- le réservoir comporte des moyens de chauffage du fluide formage qu'il contient afin d'en augmenter la pression par élévation de la température ;
- le réservoir comporte des moyens d'injection d'un fluide supplémentaire sous pression issu d'une source de pression extérieure audit poste.

D'autres caractéristiques et avantages de l'invention apparaîtront au cours de la lecture de la description détaillée qui va suivre pour la compréhension de laquelle on se reportera aux dessins annexés dans lesquels :
- la figure 1 est un diagramme qui représente l'évolution de la pression de fluide de soufflage dans un récipient en fonction du temps durant le formage du récipient selon un procédé de l'état de la technique sans récupération de fluide de reformage ;
- la figure 2 est un diagramme qui représente l'évolution de la pression de fluide de soufflage dans un récipient en fonction du temps, selon la même échelle de temps que la figure 1, durant le formage du récipient selon un procédé de l'état de la technique avec récupération du fluide de reformage dans un réservoir commun de récupération ;
- la figure 3 est une vue schématique qui représente un poste de formage comportant un réservoir individuel de récupération réalisé selon un premier mode de réalisation de l'invention, une tuyère de formage du poste étant dans une position d'attente ;
- la figure 4 est une vue similaire à celle de la figure 3 qui représente la tuyère 22 dans une position active lors d'une étape de présoufflage du récipient ;
- la figure 5 est une vue similaire à celle de la figure 3 dans laquelle la tuyère est alimentée par le réservoir individuel de récupération lors d'une étape d'utilisation du fluide de soufflage récupéré ;
- la figure 6 est une vue similaire à celle de la figure 3 dans laquelle la tuyère est alimentée par une source de fluide à haute pression lors d'une étape de soufflage ;
- la figure 7 est une vue similaire à celle de la figure 3 dans laquelle une partie du fluide de soufflage sous pression contenu dans le récipient fini est récupéré dans le réservoir individuel de récupération lors d'une étape de récupération ;
- la figure 8 est une vue similaire à celle de la figure 3 dans laquelle le récipient fini est mis à la pression atmosphérique lors d'une étape finale d'échappement ;
- la figure 9 est une vue similaire à celle de figure 3 dans laquelle la tuyère de formage du poste est dans une position d'attente et le moule est ouvert pour permettre d'extraction du récipient fini ;
- la figure 10 est un diagramme qui représente en trait plein l'évolution de la pression de fluide de soufflage dans un récipient en fonction du temps lors d'un procédé de formage réalisé selon un premier mode de réalisation de l'invention, la courbe en traits interrompus représentant l'évolution de la pression de fluide de soufflage dans un même récipient réalisé selon l'état de la technique ;
- la figure 11 est un diagramme qui représente l'évolution de la pression dans le réservoir de récupération du poste des figures 3 à 9 en fonction du temps lors du procédé de formage du récipient de la figure 10, l'échelle de temps correspondant à celle de la figure 10 ;
- la figure 12 est un vue similaire à celle de la figure 3 qui représente un poste de formage réalisé selon un deuxième mode de réalisation, dans lequel le poste de formage comporte plusieurs réservoirs individuels de récupération ;
- la figure 13 est un diagramme qui représente l'évolution de la pression de fluide de soufflage dans un récipient en fonction du temps lors d'un procédé de formage réalisé selon un deuxième mode de réalisation de l'invention mettant en oeuvre le poste de formage de la figure 12 ;
- la figure 14 est une vue schématique qui représente un réservoir individuel de récupération muni d'un piston apte à faire varier le volume dudit réservoir ;
- la figure 15 est une vue similaire à celle de la figure 14 dans laquelle le réservoir individuel de récupération est muni de moyens de chauffage du fluide de soufflage qu'il contient ;
- la figure 16 est une vue similaire à celle de la figure 14 dans laquelle le réservoir individuel de récupération est raccordé à une source externe de fluide sous pression par l'intermédiaire d'une vanne de régulation.

Dans la description et dans les revendications, le terme "pression" doit être compris comme étant la "pression totale" du fluide auquel il se rapporte. Cette "pression totale" est parfois appelée "pression génératrice". Il est rappelé que la pression totale d'un fluide est la pression de ce fluide à vitesse nulle. La pression totale d'un fluide en écoulement est par exemple mesurée au moyen d'un tube de Pitot simple agencé dans le courant de fluide. La "pression totale" doit être distinguée de la "pression statique". Lorsqu'un fluide est en écoulement adiabatique réversible, sa pression statique diminue à mesure que sa vitesse d'écoulement augmente, tandis que sa pression totale demeure constante si aucune rupture de condition d'écoulement n'est rencontrée, tels qu'une onde de choc, une onde de détente ou encore un changement brusque de section.

Dans la suite de la description, des éléments présentant une structure identique ou des fonctions analogues seront désignés par une même référence.

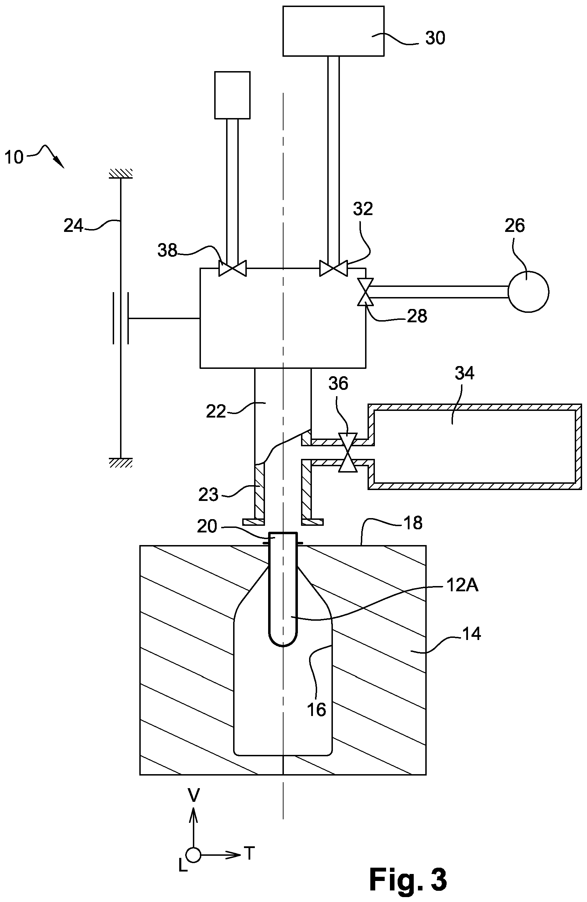

Dans la suite de la description, on adoptera à titre non limitatif des orientations longitudinale, verticale et transversale, sans rapport avec la direction de la gravité, indiquées par le trièdre "L,V,T" des figures 3 à 9.

On a représenté à la figure 3 un poste 10 de formage pour la fabrication de récipients 12C en matériau thermoplastique par soufflage ou par étirage-soufflage de préformes 12A préalablement chauffée.

Dans l'exemple de fabrication de récipient représenté aux figures, la préforme sera référencée 12A, le récipient fini obtenu à partir de cette dite préforme 12A sera référencé 12C et le récipient en cours de formage sera référencé 12B.

Ce poste 10 de formage fait partie d'une installation (non représentée) plus vaste de fabrication de récipients en grandes séries. Une telle installation comporte de manière connue une station (non représentée) de chauffage des préformes 12 et une station (non représentée) de formage.

La station de formage comporte une pluralité de postes 10 de formage qui sont identiques à celui représenté à la figure 3. Les postes 10 de formage sont destinés à être utilisés successivement de manière cyclique pour le formage des récipients 12C. Ainsi, lorsqu'un poste 10 de formage a fini de former un récipient 12C, il reçoit une nouvelle préforme 12A à former, tandis que les autres postes de formage sont en cours d'utilisation pour le formage de récipients 12B à différents états d'avancement.

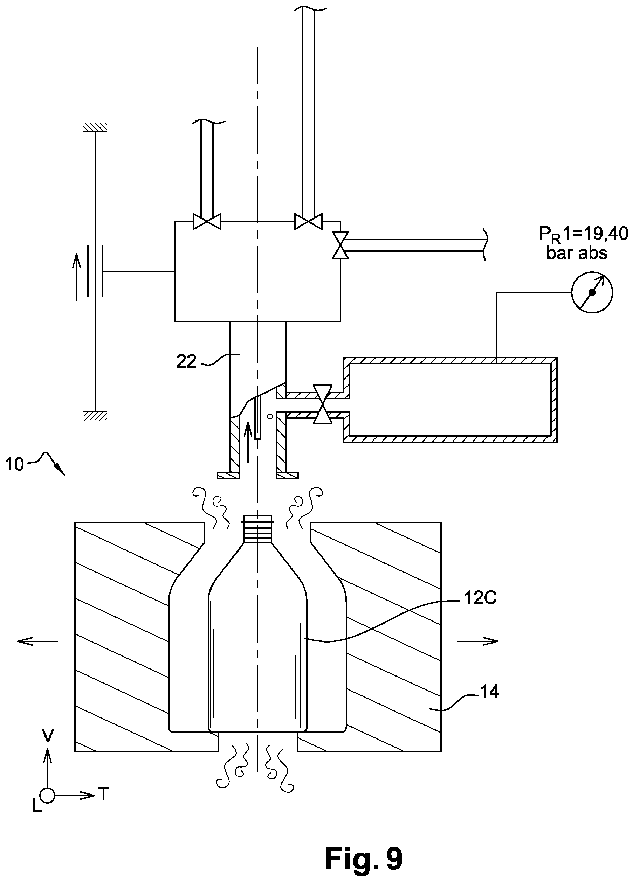

Le poste 10 de formage comporte un moule 14 qui est généralement réalisé en plusieurs parties qui peuvent être séparées pour introduire la préforme et/ou extraire le récipient 12C fini, comme illustré à la figure 9.

Le moule 14 comporte une cavité 16 qui est ouverte verticalement vers le haut par l'intermédiaire d'un orifice supérieur réalisé dans une face 18 supérieure horizontale du moule 14.

Le moule 14 est destiné à loger la préforme 12A en matériau thermoplastique. La préforme 12A est préalablement chauffée par la station de chauffage afin de rendre le matériau thermoplastique suffisamment malléable pour que la préforme 12A puisse être mise en expansion, pour former le récipient 12C fini présentant la même forme que la cavité 16.

La préforme 12A comporte généralement un corps creux qui est ouvert vers le haut par l'intermédiaire d'un orifice délimité radialement par un col 20 d'axe vertical, encore appelé goulot. Le col 20 est délimité vers le bas par une collerette externe. Seul le corps de la préforme 12A est logé dans la cavité 16 du moule 14, le col 20 s'étendant à l'extérieur de la cavité 16 en sortant par l'orifice supérieur.

Le poste 10 de formage comporte une tuyère 22 d'injection d'un fluide de soufflage sous pression dans le col 20 de la préforme 12A. Le fluide de soufflage est par exemple un gaz compressible tel que de l'air.

La tuyère 22 présente une bouche d'extrémité inférieure libre susceptible d'être raccordée de manière étanche avec la préforme 12A. Dans l'exemple représenté aux figures, la bouche d'extrémité inférieure libre de la tuyère 22 est une cloche 23 qui est susceptible de venir coiffer le col 20 de la préforme 12A.

En variante, la bouche d'extrémité inférieure libre de la tuyère est susceptible d'être insérée dans le col.

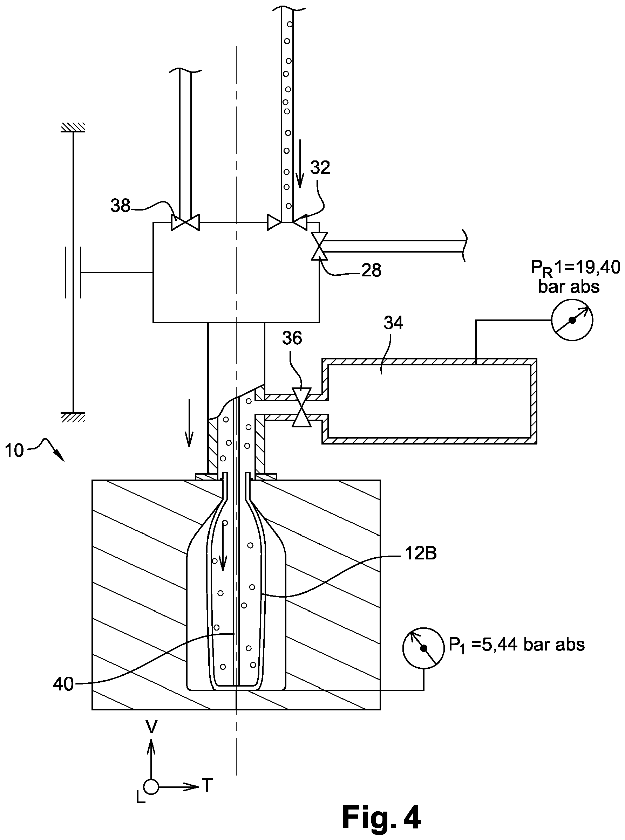

La tuyère 22 est montée coulissante sur un support 24 fixe de manière à pouvoir être commandée entre :
- une position haute d'attente, telle que représentée aux figures 3 et 9, dans laquelle la cloche 23 est agencée à distance au-dessus de la face 18 supérieure du moule 14 afin de permettre l'introduction de la préforme 12A ou l'extraction du récipient 12C fini ; et
- une position basse d'injection, telle que représentée aux figures 4 à 8, dans laquelle la tuyère 22 est raccordée de manière étanche avec la préforme 12A pour injecter le fluide de soufflage sous pression dans le col 20 de la préforme 12A.

Le bord d'extrémité inférieur de la cloche 23 est équipé d'un joint (non représenté) d'étanchéité qui est destiné à être serré verticalement vers le bas contre la face 18 supérieure du moule 14 ou contre la collerette du col 20 pour garantir l'étanchéité du raccord en position basse de la tuyère 22.

La tuyère 22 est raccordée à une première source 26 de fluide de soufflage comprimé par l'intermédiaire d'une première vanne 28 commandée de soufflage, telle qu'une électrovanne. Le fluide de soufflage fourni par la première source 26 est comprimé à une pression "Pmax" maximale de soufflage. Il s'agit par exemple d'un compresseur commandé qui comprime le fluide de soufflage entre 20 et 40 bars, par exemple à 26,38 bars.

Dans l'exemple représentée aux figures, la tuyère 22 est aussi raccordée à une deuxième source 30 de fluide de soufflage sous pression par l'intermédiaire d'une deuxième vanne 32 commandée de présoufflage, telle qu'une électrovanne. Le fluide de soufflage fourni par la deuxième source 30 est un fluide comprimé à une pression "Pint" intermédiaire de présoufflage. Il s'agit par exemple d'une source de fluide comprimé à une pression commandée entre par exemple entre 5 et 13 bars par un compresseur, ou d'un fluide précédemment comprimé à une pression supérieure par un compresseur, puis détendu à la pression requise. La pression "Pint" intermédiaire de présoufflage est commandée notamment en fonction de la forme du récipient final.

Selon un premier mode de réalisation de l'invention, la tuyère 22 est en outre raccordée à un réservoir 34 individuel de récupération par l'intermédiaire d'une troisième vanne 36 commandée de récupération, telle qu'une électrovanne. Il s'agit d'un réservoir 34 individuel de récupération qui est raccordé uniquement à la tuyère 22 du poste 10 de formage représenté aux figures 3 à 9. Le réservoir 34 individuel de récupération est un réservoir fermé qui est raccordé en dérivation avec la tuyère 22 par au moins un orifice de sortie.

Le réservoir 34 individuel de récupération alimente ainsi en fluide de soufflage uniquement la tuyère 22 du poste 10 de formage associé. En outre, le réservoir 34 individuel de récupération est alimenté en fluide de soufflage uniquement par ladite tuyère 22.

La tuyère 22 est en outre raccordée à l'atmosphère par l'intermédiaire d'une vanne 38 d'échappement.

Lorsque toutes les vannes 28, 32, 36, 38 sont fermées, la tuyère 22 présente un volume qui communique avec la bouche de sortie de son extrémité libre. Ce volume sera appelé par la suite "volume mort".

En outre, le récipient 12C fini présente un volume déterminé. La préforme 12A présente un volume inférieur à ce volume déterminé.

Lorsque la tuyère 22 occupe sa position basse à la fin d'une première phase "P1" de formage, le volume du récipient 12C fini communique avec le volume mort de la tuyère 22. La somme de ces deux volumes sera appelée "volume "Vsys" du système".

Le réservoir 34 individuel de récupération présente un volume non nul qui est nettement plus petit que celui d'un réservoir commun de récupération réalisé selon l'état de la technique. Le volume du réservoir 34 individuel de récupération est de préférence inférieur ou égal à environ cinq fois le volume "Vsys" du système.

Un tel poste 10 de formage est susceptible de mettre en oeuvre un procédé de formage en série, notamment par soufflage ou par étirage-soufflage, de récipients 12C en matériau thermoplastique par injection d'un fluide de soufflage sous pression dans des préformes 12A chauffées jusqu'à une pression "Pmax" maximale de manière à conformer chaque préforme 12A en un récipient 12C fini.

Le procédé de fabrication d'un même récipient 12C se décompose en deux phases principales qui se suivent chronologiquement.

Le procédé comporte la première phase "P1" de formage au cours de laquelle un fluide de soufflage sous pression est injecté dans la préforme 12A de manière à la déformer pour plaquer ses parois contre les faces internes de la cavité 16 du moule 14.

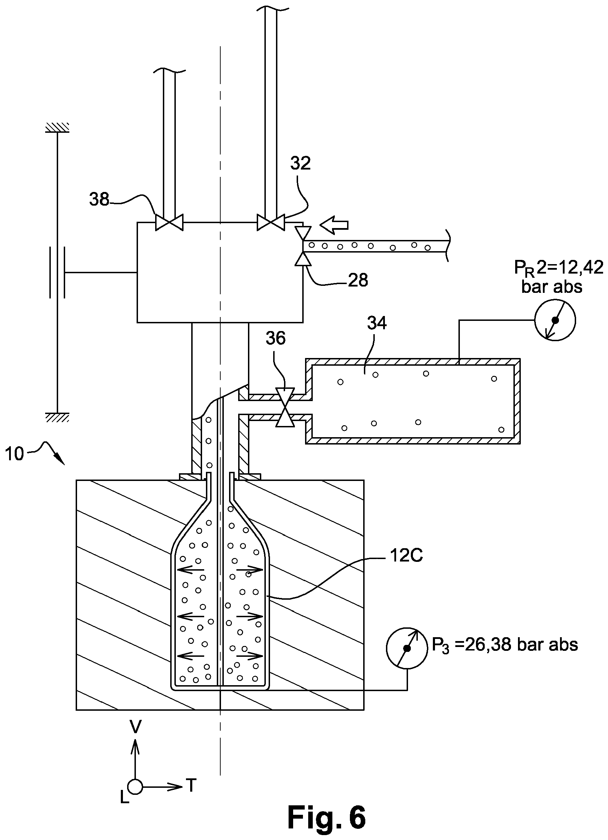

A l'issue de la première phase "P1" de formage, comme illustré à la figure 6, le récipient 12C fini présente sa forme finale. Le récipient 12C fini contient alors du fluide de soufflage sous pression qui empêche son extraction du moule 14.

Le procédé comporte ensuite une deuxième phase "P2" d'échappement qui intervient à la suite de la première phase "P1" de formage. Au cours de cette deuxième phase "P2" d'échappement, le fluide de soufflage sous pression contenu dans le récipient 12C est évacué jusqu'à ce que le contenu du récipient 12C fini soit à la pression atmosphérique. Ceci permet d'extraire sans risques le récipient 12C fini du moule 14, comme illustré à la figure 9.

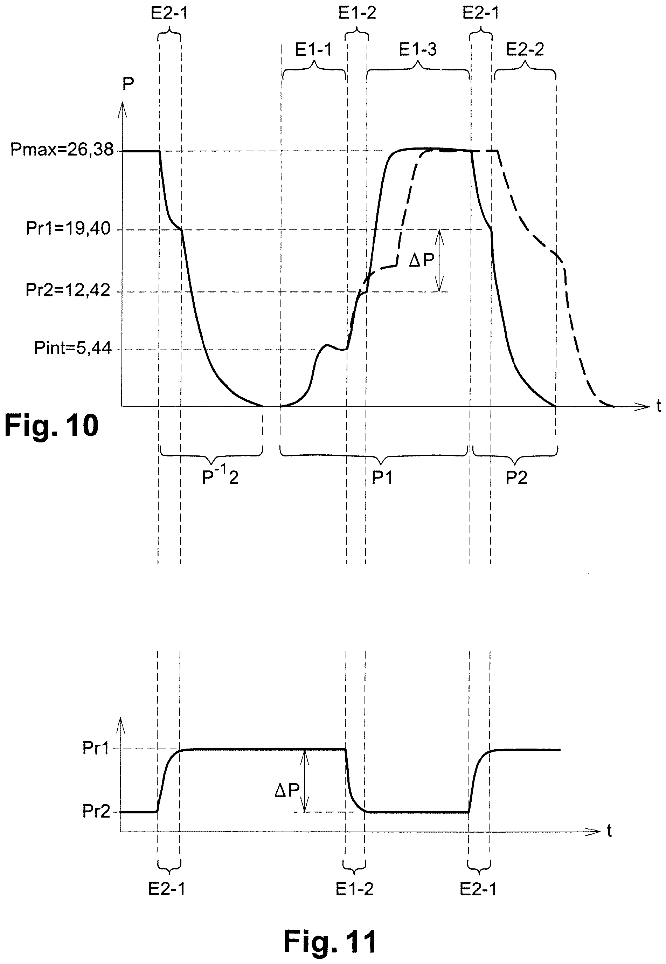

Il a été représenté à gauche au diagramme de la figure 10, l'évolution de la pression de fluide de soufflage dans un premier récipient 12C fini au cours de la deuxième phase "P⁻¹2" d'échappement dudit premier récipient 12C, indiquée par la référence "P⁻¹2", puis, au centre dudit diagramme, l'évolution de la pression dans une préforme 12A au cours de la première phase de formage du récipient 12C suivant, indiquée par la référence "P1 ".

En parallèle de ce premier diagramme de la figure 10, on a représenté à la figure 11 l'évolution de la pression dans le réservoir 34 individuel de récupération selon la même échelle de temps que sur le diagramme de la figure 10.

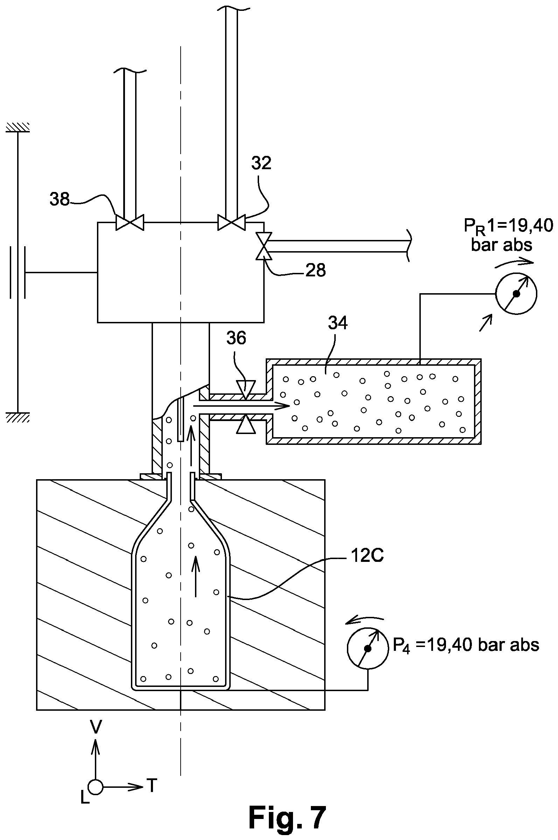

On s'intéressera tout d'abord à la phase "P⁻¹2" d'échappement du fluide de soufflage. Comme représenté à la figure 7, de l'énergie sous forme de pression est stockée dans premier récipient 12C fini en fin de première phase "P1" de formage. Il est intéressant de récupérer cette énergie pour un usage ultérieur. Ceci permet d'utiliser moins intensivement les compresseurs.

A cette fin, la phase "P⁻¹2" d'échappement comporte au moins une étape "E2-1" de récupération du fluide de soufflage sous pression contenu dans le récipient 12C fini. Le fluide de soufflage sous pression est récupéré par remplissage du réservoir 34 individuel de récupération jusqu'à une première pression d'équilibre, dite pression "Pr1" de stockage, entre le réservoir 34 individuel de récupération et le récipient 12C fini.

Dans le poste 10 de formage représenté à la figure 7, ceci est réalisé en commandant l'ouverture de la vanne 36 de récupération, les autres vannes 28, 32, 38 demeurant fermées. Le volume "Vsys" du système communique ainsi uniquement avec le réservoir 34 individuel de récupération.

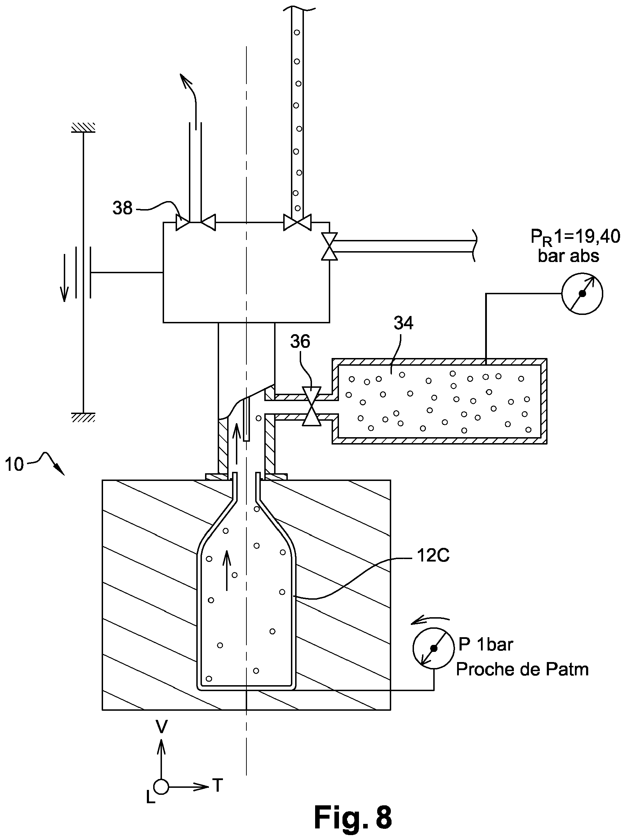

Aussitôt que la pression "Pr1" de stockage est atteinte, la vanne 36 de récupération est fermée, comme représenté à la figure 8.

Comme illustré à la figure 10, cette étape "E2-1" de récupération intervient avantageusement au début de la phase "P⁻¹2" d'échappement, lorsque la pression de fluide de soufflage dans le récipient 12C fini est supérieure à la pression dans le réservoir 34 individuel de récupération. Du fait de la différence de pressions, le fluide de soufflage contenu dans le récipient 12C fini s'écoule jusque dans le réservoir 34 individuel de récupération jusqu'à obtention de la pression "Pr1" de stockage qui équilibre le récipient 12C fini et le réservoir 34 individuel de récupération.

La phase "P1" de formage du récipient 12C suivant comporte une étape "E1-2" d'utilisation au cours de laquelle ledit fluide de soufflage stocké à la pression "Pr1" de stockage dans le réservoir 34 individuel de récupération est ensuite injecté dans le récipient 12B en cours de formage, jusqu'à obtention d'une deuxième pression d'équilibre entre le réservoir 34 individuel de récupération et ledit récipient 12B en cours de formage, dite pression "Pr2" de déstockage.

L'étape "E1-2" d'utilisation intervient lorsque la pression de fluide à l'intérieur du récipient 12B en cours de formage est inférieure à la pression "Pr1" de stockage. Du fait de cette différence de pression, le fluide de soufflage stocké dans le réservoir 34 individuel de récupération s'écoule jusque dans le récipient 12B en cours de formage jusqu'à obtention de la pression "Pr2" de déstockage.

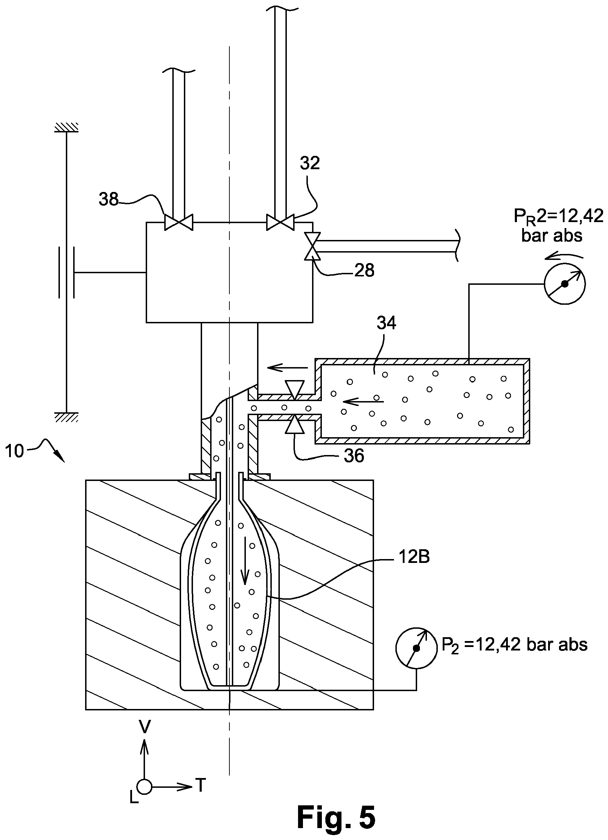

Comme représenté à la figure 5, ceci est réalisé en commandant l'ouverture de la vanne 36 de récupération, les autres vannes 28, 32, 38 demeurant fermées. Le récipient 12B en cours de formage communique alors uniquement avec le réservoir 34 individuel de récupération.

Lorsque la pression "Pr2" de déstockage est atteinte, la vanne 36 de récupération est fermée, comme représenté à la figure 6.

Comme représenté à la figure 11, dans ce mode de réalisation, la pression de fluide de soufflage dans le réservoir 34 individuel de récupération reste constante en dehors des étapes de récupération et d'utilisation. Pour ce faire, le réservoir 34 individuel de récupération demeure totalement fermé entre la fin de l'étape "E2-1" de récupération et l'étape "E1-2" d'utilisation directement suivante.

Le volume du réservoir 34 individuel de récupération est défini de manière que la pression "Pr1" de stockage dudit réservoir 34 individuel de récupération est sensiblement plus élevée que la pression "Pr2" de déstockage dudit réservoir 34 individuel de récupération. La pression de fluide de soufflage dans le réservoir 34 individuel de récupération oscille ainsi entre la pression "Pr1" d'équilibre de stockage et la pression "Pr2" d'équilibre de déstockage, comme cela est illustré à la figure 11.

Par exemple, la différence "ΔP" entre la pression "Pr1" de stockage du réservoir 34 individuel de récupération et la pression "Pr2" de déstockage dudit réservoir 34 individuel de récupération est d'au moins 1 bar.

Selon une variante non représentée de l'invention, la différence "ΔP" de pression entre la pression "Pr1" de stockage et la pression "Pr2" de déstockage du réservoir individuel de récupération est au moins égale à 7% de la pression "Pmax" maximale de fluide.

Du fait de cette différence "ΔP" entre la pression "Pr1" de stockage et la pression "Pr2" de déstockage, le débit de fluide de soufflage entre le réservoir 34 individuel de récupération et le récipient 12B, lors de l'étape "E1-2" d'utilisation, ou entre le réservoir 34 individuel de récupération et le récipient 12C fini, lors de l'étape "E2-1" de récupération, est nettement plus rapide que le débit d'un réservoir commun réalisé selon l'état de la technique.

De fait que, lors de l'ouverture de la vanne 36 de récupération, la pression dans le volume "Vsys" du système et la pression dans le réservoir 34 individuel de récupération convergent simultanément et rapidement vers la pression d'équilibre, de stockage "Pr1" ou de déstockage "Pr2", tandis que dans le cas d'un réservoir commun de récupération réalisé selon l'état de la technique, seule la pression du volume "Vsys" du système varie sensiblement.

La pression "Pr1" de stockage et la pression "Pr2" de déstockage dépendent notamment du quotient du volume du réservoir 34 individuel de récupération sur le volume "Vsys" du système. Plus particulièrement, il a été constaté que lorsque ce quotient augmente, la pression "Pr1" de stockage et la pression "Pr2" de déstockage tendent, à l'extrême, vers une même valeur limite intermédiaire.

La pression "Pr1" de stockage dépend aussi de la pression dans le récipient 12C fini au début de l'étape "E2-1" de récupération. De même, la pression "Pr2" de déstockage dépend aussi de la pression dans le récipient 12C en cours de formage au début de l'étape "E1-2" d'utilisation.

Les pressions de stockage "Pr1" et de déstockage "Pr2" sont atteintes automatiquement en effectuant quelques cycles de formage en période transitoire. En période stabilisé la pression varie comme indiqué à la figure 11, en oscillant de manière stable entre la pression de stockage "Pr1" et la pression de déstockage "Pr2".

Pour améliorer encore le débit de fluide de soufflage entre le réservoir 34 individuel de récupération et le récipient 12B, 12C, le réservoir 34 individuel de récupération est avantageusement agencé à proximité immédiate de la tuyère 22. On comprendra que la totalité du volume du réservoir 34 individuel de récupération est agencé à proximité immédiate de la tuyère 22 pour faire en sorte que le trajet du fluide de soufflage entre le point le plus éloigné du réservoir 34 individuel de récupération et le récipient 12C soit le plus court possible. Les pertes de charge par frottement ou les pertes de pression totale par détente du fluide de soufflage compressible sont ainsi avantageusement limitées.

Le réservoir 34 individuel de récupération est par exemple entièrement compris dans un rayon de moins d'un mètre de la tuyère 22 associée, de préférence moins de 50 cm, idéalement moins de 20 cm.

Selon une variante non représentée de l'invention, pour satisfaire à cette contrainte de proximité, le réservoir individuel de récupération est par exemple réalisé dans le support fixe de la tuyère 22.

Pour favoriser encore plus le débit du fluide de soufflage, et pour éviter les pertes d'énergie, le raccordement du réservoir 34 individuel de récupération avec la tuyère 22 est réalisé de manière à favoriser l'écoulement du fluide dans les deux sens sans perte d'énergie. Une telle conception permet ainsi d'obtenir un débit de fluide très important dans les deux sens. Ceci ajouté à la proximité entre le réservoir 34 et la tuyère 22 permet un transfert de fluide quasiment instantané entre le réservoir 34 et le récipient.

Ainsi, les changements de direction trop brusques de l'écoulement sont à éviter car ils provoquent des perturbations locales de l'écoulement et des pertes de charge par frottement.

De même, le fluide de soufflage étant un gaz compressible, les volumes de détente autour du courant principal de fluide de soufflage sont à éviter car ils entraînent une chute de pression totale.

On décrit à présent chronologiquement un exemple de procédé de fabrication d'un récipient 12C en référence aux figures 3 à 10, ainsi qu'aux diagrammes des figures 10 et 11.

Au début de la phase "P1" de formage, comme illustré à la figure 3, la préforme 12A contient de l'air à la pression atmosphérique, c'est à dire une pression d'environ 1 bar. Le récipient 12C fini à obtenir présente ici un volume de 500 mL.

Le réservoir 34 individuel de récupération contient du fluide de soufflage récupéré dans le récipient 12C fini précédent à la pression "Pr1" de stockage, qui est ici d'environ 19,40 bars. Le réservoir 34 individuel de récupération présente ici un volume qui est égal au volume "Vsys" du système.

Toutes les vannes 28, 32, 36, 38 de commande occupent leur position fermée.

Lors d'une première étape "E1-1" de présoufflage de cette phase "P1" de formage, du fluide de soufflage à la pression intermédiaire de présoufflage est introduit dans la préforme 12A. Ceci est réalisé en commandant l'ouverture de la vanne 32 de présoufflage.

S'agissant d'une opération d'étirage-soufflage, une tige 40 d'élongation pousse simultanément le fond de la préforme 12A de manière à étirer les parois de la préforme 12A.

La préforme 12A devient alors le récipient 12B en cours de formage de manière que son volume augmente. La pression dans le récipient 12B en cours de formage augmente jusqu'à la pression intermédiaire de présoufflage qui est ici de 5,44 bars, comme illustré à la figure 11.

Comme représenté à la figure 5, la vanne 32 de présoufflage est alors fermée. La deuxième étape "E1-2" d'utilisation du fluide de soufflage stocké dans le réservoir 34 individuel de récupération est alors déclenchée. Pour ce faire, la vanne 36 de récupération est commandée dans sa position ouverte.

Du fait de la différence de pression entre le réservoir 34 individuel de récupération et le récipient 12B en cours de formage, le fluide de soufflage stocké dans le réservoir 34 individuel de récupération s'écoule jusque dans le récipient 12B en cours de formage jusqu'à l'équilibre de pression instantané entre le réservoir 34 individuel de récupération et le récipient 12B en cours de formage. Cette pression d'équilibre constitue la pression "Pr2" de déstockage qui est ici de 12,42 bars.

Ainsi, comme illustré à la figure 10, la pression dans le récipient 12B augmente de pression "Pint" intermédiaire de 5,44 bars jusqu'à la pression "Pr2" de déstockage de 12,42 bars, permettant la poursuite de l'expansion de la préforme 12A. Dans le même temps, comme illustré à la figure 11, la pression dans le réservoir 34 individuel de récupération baisse depuis sa pression "Pr1" de stockage de 19,40 bars jusqu'à sa pression "Pr2" de déstockage de 12,42 bars.

Lorsque la pression "Pr2" de déstockage a été atteinte, la vanne 36 de récupération est fermée.

Une troisième étape "E1-3" de soufflage est alors déclenchée, comme illustré à la figure 6. Au cours de cette troisième étape, la vanne 28 de soufflage est ouverte de manière à injecter du fluide de soufflage comprimé à 26,38 bars par le compresseur dans le récipient 12B en cours de formage, comme illustré à la figure 10. Cette pression très élevée permet de plaquer fortement les parois du récipient 12B en cours de formage contre l'empreinte de la cavité 16 afin de conférer au récipient 12B sa forme de récipient 12C fini.

La vanne 28 de soufflage demeure ouverte le temps que le récipient 12B ait acquis sa forme définitive, puis la vanne 28 de soufflage est fermée. Le récipient 12C fini contient alors du fluide de soufflage à la pression "Pmax" maximale de 26,38 bars.

Cette troisième étape "E1-3" de soufflage met fin à la phase "P1" de formage. La phase "P2" d'échappement est alors déclenchée.

Au début de la phase "P2" d'échappement, la pression de fluide de soufflage contenu dans le récipient 12C fini est égale à la pression "Pmax" maximale de 26,38 bars, comme représenté à la figure 10, tandis que le réservoir 34 individuel contient du fluide de soufflage à la pression "Pr2" de déstockage de 12,42 bars, comme représenté à la figure 11.

La phase "P2" d'échappement commence par l'étape "E2-1" de récupération en commandant l'ouverture de la vanne 36 de récupération, comme représenté à la figure 7.

Du fait de la différence de pression, du fluide de soufflage contenu dans le récipient 12C fini s'écoule jusque dans le réservoir 34 individuel de récupération jusqu'à ce que le fluide de soufflage atteigne la pression "Pr1" de stockage dans le récipient 12C fini et dans le réservoir 34 individuel de récupération, comme illustré aux figures 10 et 11. Comme expliqué précédemment cette pression "Pr1" de stockage est de 19,40 bars.

Comme représenté à la figure 8, lorsque la pression "Pr1" de stockage est atteinte, la vanne 36 de récupération est fermée.

Lors d'un étape finale "E2-2", la vanne 38 d'échappement est ouverte pour permettre au reste du fluide de soufflage de s'échapper soit vers l'atmosphère, soit vers un autre dispositif de récupération, jusqu'à ce que la pression dans le récipient 12C fini soit sensiblement égale à la pression atmosphérique pour permettre son extraction.

Le récipient 12C fini, alors à la pression atmosphérique, peut être extrait sans danger du moule 14. Pour ce faire, la tuyère 22 est relevée dans sa position haute et le moule 14 est ouvert comme représenté à la figure 9.

Le procédé peut alors être réitéré en réutilisant le fluide de soufflage récupéré dans le réservoir 34 individuel de récupération pour fabriquer le récipient 12C suivant à partir d'une nouvelle préforme 12A.

On a représenté en traits interrompus à la figure 11 l'évolution de la pression dans un récipient formé selon un procédé de l'état de la technique mettant en oeuvre un réservoir de récupération commun à tous les postes de soufflage. On constate qu'un récipient 12C fini est obtenu beaucoup plus rapidement par le procédé réalisé selon le premier mode de réalisation de l'invention, représenté en traits continus, que par un procédé réalisé selon ledit état de la technique. Le procédé réalisé selon les enseignements de l'invention permet ainsi de recycler une partie du fluide de soufflage sous pression de manière plus rapide et plus efficace qu'un procédé de l'état de la technique.

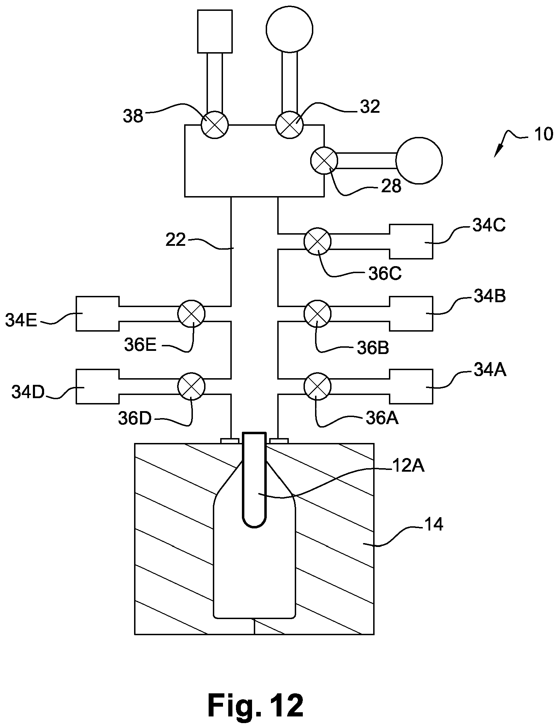

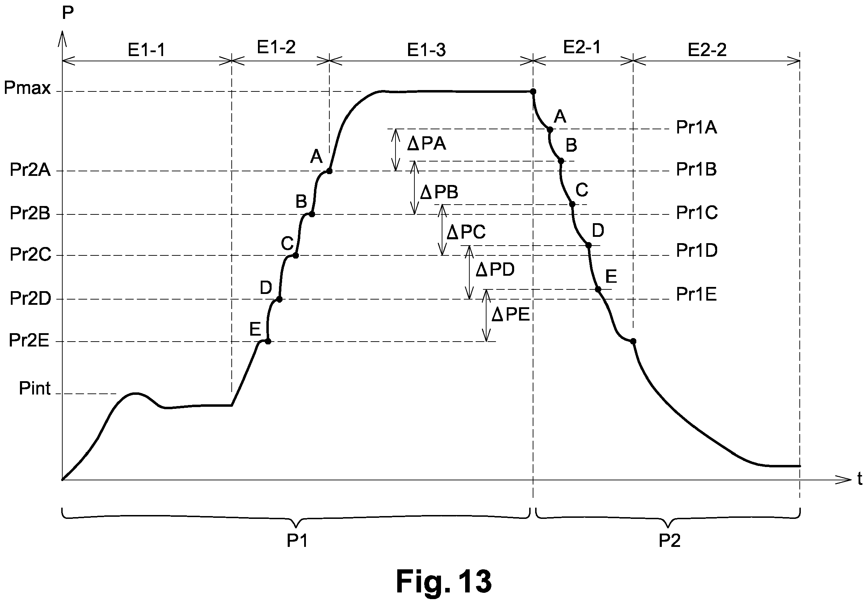

Selon un deuxième mode de réalisation de l'invention représenté aux figures 12 et 13, le poste 10 de formage est équipé de plusieurs réservoirs individuels de récupération distincts. Chaque réservoir 34 individuel de récupération est raccordé en dérivation à la tuyère 22 par l'intermédiaire d'une vanne 36 commandée de récupération associée.

Le reste du poste 10 de formage présente une structure identique à celle décrite dans le premier mode de réalisation.

Dans ce cas, la phase d'échappement du procédé de fabrication d'un n récipient 12C comporte plusieurs étapes successives de récupération du fluide de soufflage dudit récipient 12C fini par remplissage successif de chaque réservoir 34 individuel de récupération distinct dont chacun est associé à l'une des étapes de récupération.

Durant la phase "P1" suivante de formage d'un deuxième récipient, le procédé de formage comporte autant d'étapes successives d'utilisation du fluide de soufflage récupéré par injection successive du fluide de soufflage contenu dans chacun desdits réservoirs individuels de récupération dans ladite préforme 12A.

Selon un exemple représenté à la figure 12, le poste 10 de formage comporte cinq réservoirs individuels de récupération. Les réservoirs individuels de récupération seront référencés 34A à 34E, et leurs vannes de récupération associées seront référencées 36A à 36E. Le procédé de formage mettant en oeuvre ce dispositif peut ainsi comporter jusqu'à cinq étapes "E2-1A" à "E2-1 E" de récupération et cinq étapes "E1-2A" à "E1-2E" d'utilisation.

La dernière lettre de la référence de chaque étape correspond au réservoir individuel de récupération mis en communication avec le récipient durant cette dite étape, ainsi le deuxième réservoir 34B de récupération sera utilisé durant l'étape "E1-2B" d'utilisation.

Lors de la phase "P2" d'échappement, les réservoirs 34A à 34E individuel de récupération sont utilisés l'un après l'autre selon un ordre déterminé depuis le premier réservoir 34A jusqu'au cinquième réservoir 34E. Chaque réservoir 34A à 34E individuel de récupération présente une pression "Pr2" de déstockage supérieure à la pression "Pr2" de déstockage du réservoir 34 individuel de récupération suivant selon ledit ordre d'utilisation.

Lors de la phase "P1" de formage suivante, les réservoirs 34A à 34E individuels de récupération sont utilisés successivement par chaque étape d'utilisation dans l'ordre inverse de leur remplissage au cours des étapes de récupération. Chaque réservoir 34A à 34E individuel de récupération présente une pression "Pr1" de stockage inférieur à la pression "Pr1" de déstockage du réservoir 34 individuel de récupération suivant selon ledit ordre inverse d'utilisation.

Toutes les étapes "E1-2E" à "E1-2A" d'utilisation interviennent successivement durant la phase "P1" de formage d'un même récipient 12C, puis toutes les étapes "E2-1A" à "E2-1 E" de récupération interviennent successivement durant la phase "P2" d'échappement du fluide de soufflage dudit récipient 12C fini. Ainsi, la première "E1-2E" des étapes d'utilisation est déclenchée durant la phase "P1" de formage dudit récipient 12C, après la fin de la dernière des étapes "E2-1 E" de récupération de la phase "P2" d'échappement du récipient 12C précédent.

Lors d'une phase "P2" d'échappement, les étapes "E2-1A" à "E2-1 E" de récupération sont enchaînées directement les unes à la suite des autres. Ainsi, à l'issue de chaque étape "E2-1A" à "E2-1 D" de récupération, la pression de stockage "Pr1" du réservoir 34A à 34E individuel de récupération associé correspond à la pression de fluide dans le récipient 12C fini au début de l'étape "E2-1 B" à "E2-1 E" de récupération directement suivante.

De même, lors d'une phase "P1" de formage, les étapes "E1-2E" à "E1-2A" d'utilisation sont enchaînées directement les unes à la suite des autres. Ainsi, à l'issue de chaque étape "E1-2E" à "E1-2B" d'utilisation, la pression "Pr2" de déstockage du réservoir 34E à 34B individuel de récupération associé correspond à la pression de fluide dans le récipient 12B en cours de formage au début de l'étape "E1-2D" à "E1-2A" d'utilisation directement suivante.

On décrit à présent la fabrication d'un récipient 12C par mise en oeuvre d'un tel procédé en se référant à la figure 13.

Au début de la phase "P1" de formage, la préforme 12A contient de l'air à la pression atmosphérique, c'est à dire une pression d'environ 1 bar. Le récipient 12C fini à obtenir présente un volume de 500 mL.

Chacun des cinq réservoirs 34A à 34E individuels de récupération présente ici un volume qui est égal à la moitié du volume "Vsys" du système.

Chaque réservoir 34A à 34E individuel de récupération contient du fluide de soufflage récupéré auparavant dans le récipient 12C fini précédent à une pression "Pr1" de stockage associée, ainsi :
- la pression "Pr1A" de stockage est de 24,04 bars pour le premier réservoir 34A individuel de récupération ;
- la pression "Pr1 B" de stockage est de 21,70 bars pour le deuxième réservoir 34B individuel de récupération ;
- la pression "Pr1 C" de stockage est de 19,36 bars pour le troisième réservoir 34C individuel de récupération ;
- la pression "Pr1 D" de stockage est de 17,02 bars pour le quatrième réservoir 34D individuel de récupération ;
- la pression "Pr1 E" de stockage est de 14,68 bars pour cinquième réservoir 34E individuel de récupération.

Au début du procédé, toutes les vannes 28, 32, 36A à 36E, 38 de commande occupent leur position fermée.

Lors d'une première étape "E1-1" de présoufflage de cette phase "P1" de formage, du fluide de soufflage à la pression intermédiaire de présoufflage est injecté dans la préforme 12A. Pour ce faire, la vanne 32 de présoufflage est ouverte.

Le récipient 12B est alors en cours de formation de manière que son volume augmente. La pression dans le récipient 12B en cours de formation augmente jusqu'à la pression intermédiaire de présoufflage qui est de 7,6 bars.

La deuxième vanne 32 de présoufflage est ensuite fermée.

Lors des deuxièmes étapes "E1-2E" à "E1-2A", les réservoirs 34E à 34A individuels de récupération sont ensuite utilisés successivement pour augmenter progressivement la pression dans le récipient 12B en cours de formage. Les réservoirs 34E à 34A individuels de récupération sont utilisés selon l'ordre croissant de leur pression "Pr1A" à "Pr1 E" de stockage, c'est à dire en partant du réservoir 34E individuels de récupération à la pression "Pr1 E" de stockage la plus basse et en finissant par le réservoir 34A individuel de récupération à la pression "Pr1A" de stockage la plus élevée.

Ainsi, une deuxième étape "E1-2E" d'utilisation du fluide de soufflage stocké dans le cinquième réservoir 34E individuel de récupération est déclenchée. Pour ce faire, la cinquième vanne 36E de récupération est commandée dans sa position ouverte.

Du fait de la différence de pression entre le cinquième réservoir 34E individuel de récupération et le récipient 12B en cours de formage, le fluide de soufflage stocké dans ledit réservoir 34E individuel de récupération s'écoule jusque dans le récipient 12B en cours de formage jusqu'à ce que la pression dudit réservoir 34 individuel de récupération s'équilibre avec la pression dans le récipient 12B en cours de formage. Cette pression d'équilibre, qui est ici de 9,95 bars, constitue la pression "Pr2E" de déstockage du cinquième réservoir 34 individuel de récupération.

Ainsi, la pression dans le récipient 12B en cours de formation augmente de 7,6 bars jusqu'à 9,95 bars, permettant la poursuite de l'expansion du récipient 12B, comme indiqué à la figure 13. Dans le même temps, la pression dans le cinquième réservoir 34E individuel de récupération baisse depuis sa pression "Pr1 E" de stockage de 14,68 bars jusqu'à sa pression "Pr2E" de déstockage de 9,95 bars. La différence entre la pression "Pr1 E" de stockage et la pression "Pr2E" de déstockage dans ledit réservoir 34E individuel de récupération est notée "ΔPE" à la figure 13.

Lorsque la pression "Pr2E" de déstockage a été atteinte, la cinquième vanne 36E de récupération est fermée.

Une troisième étape "E1-2D" d'utilisation du fluide de soufflage stocké dans le quatrième réservoir 34D individuel de récupération est alors déclenchée. Pour ce faire, la quatrième vanne 36D de récupération est commandée dans sa position ouverte.

Comme lors de l'étape "E1-2E" d'utilisation précédente, le fluide de soufflage stocké dans le quatrième réservoir 34D individuel de récupération s'écoule jusque dans le récipient 12B en cours de formage jusqu'à ce la pression dudit réservoir 34D individuel de récupération s'équilibre avec la pression dans le récipient 12B en cours de formage. Cette pression d'équilibre, qui est ici de 12,30 bars, constitue de la pression "Pr2D" de déstockage du quatrième réservoir 34D individuel de récupération. La quatrième vanne 36 de récupération est alors fermée.

Ainsi, la pression dans le récipient 12B en cours de formage augmente de 9,95 bars jusqu'à 12,30 bars, permettant la poursuite de l'expansion du récipient 12B, comme indiqué à la figure 13. Dans le même temps, la pression dans le quatrième réservoir 34D individuel de récupération baisse depuis sa pression "Pr1 D" de stockage de 17,02 bars jusqu'à sa pression "Pr2D" de déstockage de 12,30 bars. La différence entre la pression "Pr1 D" de stockage et la pression "Pr2D" de déstockage dans ledit réservoir 34D individuel de récupération est notée "ΔPD" à la figure 13.

Cette opération est réitérée successivement avec les troisième 34C, deuxième 34B et premier 34A réservoirs individuels de récupération au cours d'une quatrième "E1-2C", cinquième "E1-2B" et sixième "E1-2A" étapes d'utilisation.

Lors de la quatrième étape "E1-2C" d'utilisation, le troisième réservoir 34C individuel de récupération est utilisé en commandant l'ouverture de la troisième vanne 36C de récupération. La pression dans le récipient 12B en cours de formage augmente alors depuis 12,30 bars jusqu'à 14,65 bars, comme illustré à la figure 13, tandis que la pression dans le troisième réservoir 34C individuel de récupération baisse depuis sa pression "Pr1 C" de stockage de 19,36 bars jusqu'à sa pression "Pr2C" de déstockage de 14,65 bars. La différence entre la pression "Pr1 C" de stockage et la pression "Pr2C" de déstockage dans ledit réservoir 34C individuel de récupération est notée "ΔPD" à la figure 13.

La troisième vanne 36C de récupération est alors fermée.

Puis, lors de la cinquième étape "E1-2B" d'utilisation, le deuxième réservoir 34B individuel de récupération est utilisé en commandant l'ouverture de la deuxième vanne 36B de récupération. La pression dans le récipient 12B en cours de formage augmente alors depuis 14,65 bars jusqu'à 17,00 bars, tandis que la pression dans le deuxième réservoir 34B individuel de récupération baisse depuis sa pression "Pr1 B" de stockage de 21,70 bars jusqu'à sa pression "Pr2B" de déstockage de 17,00 bars. La différence entre la pression "Pr1 B" de stockage et la pression "Pr2B" de déstockage dans ledit réservoir 34B individuel de récupération est notée "ΔPB" à la figure 13.

La deuxième vanne 36B de récupération est alors fermée.

Enfin, lors de la sixième "E1-2A" étape d'utilisation, le premier réservoir 34A individuel de récupération est utilisé en commandant l'ouverture de la première vanne 36A de récupération. La pression dans le récipient 12B en cours de formage augmente alors depuis 17,00 bars jusqu'à 19,35 bars, tandis que la pression dans le premier réservoir 34A individuel de récupération baisse depuis sa pression "Pr1A" de stockage de 24,04 bars jusqu'à sa pression "Pr2A" de déstockage de 19,35 bars. La différence entre la pression "Pr1A" de stockage et la pression "Pr2A" de déstockage dans ledit réservoir 34A individuel de récupération est notée "ΔPA" à la figure 13.

La première vanne 36A de récupération est alors fermée.

Une septième étape "E1-3" de soufflage est alors déclenchée. Au cours de cette septième étape "E1-3", la vanne 28 de soufflage est ouverte de manière à injecter du fluide de soufflage comprimé à 26,38 bars par le compresseur dans le récipient 12B en cours de formage. Cette pression très élevée permet de plaquer fortement les parois du récipient 12B contre l'empreinte de la cavité 16 afin de lui conférer sa forme de récipient 12C fini.

La vanne 28 de soufflage demeure ouverte le temps que le récipient 12C fini ait acquis sa forme définitive, puis la première vanne 28 de soufflage est fermée. Le récipient 12C fini contient alors du fluide de soufflage à la pression "Pmax" maximale de 26,38 bars.

Cette septième étape "E1-3" de soufflage met fin à la phase "P1" de formage. La phase "P2" d'échappement est alors déclenchée.

La phase "P2" d'échappement commence par enchaîner directement et successivement les étapes "E2-1A" à "E2-1 E" de récupération dans chacun des réservoirs 34A à 34E individuels de récupération dans l'ordre inverse de la première phase "P1" de formage, c'est à dire selon l'ordre décroissant de leur pression "Pr2" de déstockage, c'est à dire en partant du réservoir 34A individuels de récupération à la pression "Pr2E" de déstockage la plus élevée et en finissant par le réservoir 34E individuel de récupération à la pression "Pr2E" de déstockage la plus basse.

La phase "P2" d'échappement commence ainsi par une première étape "E2-1A" de récupération en commandant l'ouverture de la première vanne 36A de récupération. La pression de fluide de soufflage contenu dans le récipient 12C fini est de 26,38 bars tandis que le premier réservoir 34A individuel de récupération contient du fluide de soufflage à la pression "Pr2A" de déstockage de 19,35 bars.

Du fait de la différence de pression, du fluide de soufflage contenu dans le récipient 12C fini s'écoule jusque dans le premier réservoir 34A individuel de récupération jusqu'à ce que le fluide de soufflage atteigne la pression d'équilibre de stockage dans le récipient 12C fini et dans le premier réservoir 34A individuel de récupération. Comme expliqué précédemment cette pression d'équilibre, qui est de 24,04 bars, constitue la pression "Pr1A" de stockage du premier réservoir 34 individuel de récupération.

Lorsque la pression "Pr1A" de stockage est atteinte, la première vanne 36A de récupération est fermée.

Les opérations de la première étape "E2-1A" de récupération sont réitérées successivement avec les deuxième, troisième, quatrième et cinquième réservoirs 34Bà 34E individuels de récupération au cours de deuxième, troisième, quatrième et cinquième étapes "E2-1 B" à "E2-1 E" de récupération.

Ainsi, la deuxième étape "E2-1 B" de récupération est déclenchée directement. La deuxième vanne 36B de récupération est ouverte. La pression dans le récipient 12C fini baisse depuis 24,04 bars jusqu'à 21,70 bars, tandis que la pression dans le deuxième réservoir 34B individuel de récupération augmente depuis sa pression "Pr2B" de déstockage de 17,00 bars jusqu'à sa pression "Pr1 B" de stockage 21,70 bars. Lorsque la pression "Pr1 B" de stockage de 21,70 bars est atteinte, la deuxième vanne 36B de récupération est fermée.

Puis, la troisième étape "E2-1C" de récupération est déclenchée directement. La troisième vanne 36C de récupération est ouverte. La pression dans le récipient 12C baisse depuis 21,70 bars jusqu'à 19,36 bars, tandis que la pression dans le troisième réservoir 34C individuel de récupération augmente depuis sa pression "Pr2C" de déstockage de 14,65 bars jusqu'à sa pression "Pr1 C" de stockage 19,36 bars. Lorsque la pression "Pr1 C" de stockage de 19,36 bars est atteinte, la troisième vanne 36C de récupération est fermée.

Puis, la quatrième étape "E2-1 D" de récupération est déclenchée directement. La quatrième vanne 36D de récupération est ouverte. La pression dans le récipient 12C fini baisse depuis 19,36 bars jusqu'à 17,02 bars, tandis que la pression dans le quatrième réservoir 34D individuel de récupération augmente depuis sa pression "Pr2D" de déstockage de 12,30 bars jusqu'à sa pression "Pr1 D" de stockage de 17,02 bars. Lorsque la pression d'équilibre de stockage de 17,02 bars est atteinte, la quatrième vanne 36D de récupération est fermée.

Enfin, la cinquième étape "E2-1 E" de récupération est déclenchée directement. La cinquième vanne 36E de récupération est ouverte. La pression dans le récipient 12C fini baisse depuis 17,02 bars jusqu'à 14,68 bars, tandis que la pression dans le cinquième réservoir 34E individuel de récupération augmente depuis sa pression "Pr2E" de déstockage de 9,95 bars jusqu'à sa pression "Pr1 E" de stockage de 14,68 bars. Lorsque la pression d'équilibre de stockage de 14,68 bars est atteinte, la cinquième vanne 36E de récupération est fermée.

Lors d'un étape "E2-2" finale, en fin de phase d'échappement, la vanne 38 d'échappement est ouverte pour permettre au reste du fluide de soufflage de s'échapper soit vers l'atmosphère, soit vers un autre dispositif de récupération, jusqu'à ce que la pression dans le récipient 12C fini soit sensiblement égale à la pression atmosphérique.

Le procédé peut alors être réitéré en réutilisant le fluide de soufflage récupéré dans les réservoirs 34A à 34E individuels de récupération pour fabriquer le récipient 12C suivant à partir d'une nouvelle préforme 12A.

Comme on peut le voir à la figure 13, le procédé de fabrication de récipient 12C ainsi mis en oeuvre permet de recycler une grande partie du fluide de soufflage sans apport d'énergie extérieure tout en garantissant la rapidité de la phase de formage et de la phase d'échappement.

Selon une variante de réalisation du poste 10 de formage qui est applicable à l'un quelconque des modes de réalisation de l'invention, chaque réservoir 34 individuel de récupération présente un volume variable.

Ceci permet notamment d'adapter le volume du réservoir 34 individuel de récupération au volume du récipient 12C fini lorsque l'installation est conçue pour permettre le formage de récipients de formats variés.

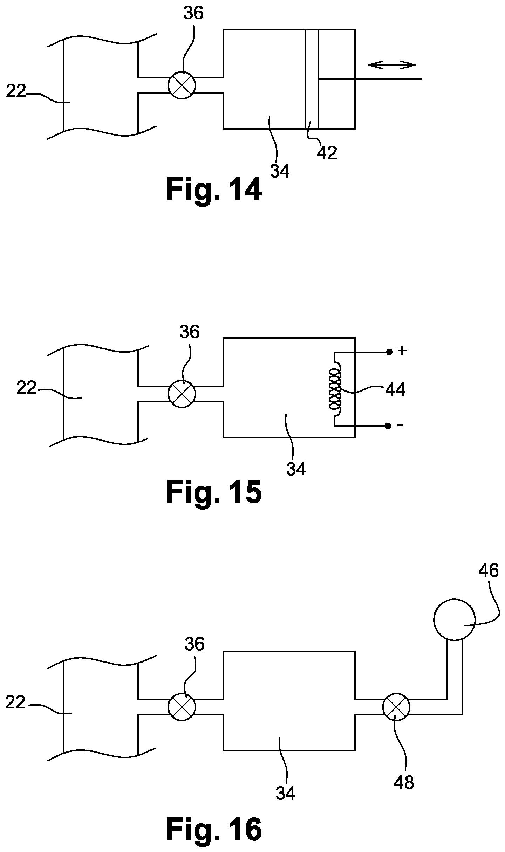

Selon un exemple de réalisation de cette variante qui est représenté à la figure 14, le fond du réservoir 34 est par exemple formé par un piston 42 qui est monté coulissant dans le réservoir 34 individuel de récupération.

Selon cette variante, le volume du réservoir 34 individuel de récupération demeure constant durant l'application du procédé de fabrication. Le volume du réservoir 34 est réglé lors d'un changement de format de récipient, s'accompagnant généralement d'un changement de moule 14.

Selon un troisième mode de réalisation représenté aux figures 14 à 16, le procédé comporte une étape intermédiaire d'augmentation de la pression du fluide de soufflage contenu dans au moins un réservoir 34 individuel de récupération par des moyens d'augmentation de la pression. L'étape intermédiaire est interposée entre l'étape de récupération et l'étape suivante d'utilisation associée audit réservoir 34 individuel de récupération.

Ainsi, l'augmentation de pression intervient après la fin de l'étape de récupération et avant l'étape suivante d'utilisation, tandis que la pression dans le réservoir 34 demeure constante entre une étape d'utilisation et l'étape suivante de récupération.

Le reste du procédé demeure inchangé par rapport aux procédés décrits dans les deux modes de réalisation précédents.

Cette augmentation de pression est réalisée par des moyens d'apport d'énergie extérieur.

Selon une première variante représentée à la figure 15, le réservoir individuel de récupération comporte des moyens 44 de chauffage, par exemple une résistance électrique chauffante, du fluide formage qu'il contient afin d'en augmenter la pression par élévation de la température.

Selon une deuxième variante représentée à la figure 16, le réservoir 34 individuel de récupération comporte des moyens d'injection d'un fluide supplémentaire sous pression issu d'une source 46 de pression extérieure au poste 10 de formage. La source 46 est raccordée au réservoir 34 individuel de récupération par l'intermédiaire d'une vanne 48 commandée de régulation. Ladite vanne 48 de régulation est ainsi ouverte uniquement entre l'étape de récupération et l'étape suivante d'utilisation, lorsque la vanne 36 de récupération dudit réservoir 34 individuel de récupération est fermée. La vanne 48 commandée de régulation est fermée durant les étapes de récupération et d'utilisation afin de garantir une convergence rapide de la pression vers la pression d'équilibre de stockage "Pr1" ou de déstockage "Pr2".

Selon une troisième variante, l'augmentation de pression est réalisée par variation du volume du réservoir 34 individuel de récupération. Par exemple au moyen d'un piston 42 comme représenté à la figure 14.

L'invention a été décrite en application à un procédé d'étirage-soufflage comportant une étape de présoufflage. On comprendra que l'invention est aussi applicable à un procédé de soufflage ne comportant pas l'étape de présoufflage. En ce que, la pression de déstockage du dernier réservoir est égale à la pression atmosphérique.

## Revendications

1. Procédé de formage en série, notamment par soufflage ou par étirage-soufflage, de récipients (12C) en matériau thermoplastique par injection d'un fluide de soufflage sous pression dans des préformes (12A) préchauffées jusqu'à une pression (Pmax) maximale de manière à conformer chaque préforme (12A) en récipient (12C), le procédé comportant :
- au moins une étape (E2-1) de récupération de fluide de soufflage sous pression contenu dans un récipient (12C) fini à l'issue de son formage par remplissage d'un réservoir (34) jusqu'à une première pression d'équilibre entre le réservoir (34) et le récipient (12C) fini, dite pression (Pr1) de stockage ;
- au moins une étape (E1-2) ultérieure d'utilisation du fluide de soufflage récupéré, par injection du fluide de soufflage contenu dans le réservoir (34) dans un récipient (12B) en cours de formage, jusqu'à obtention d'une deuxième pression d'équilibre entre le réservoir (34) et le récipient (12B), dite pression (Pr2) de déstockage ;
la pression (Pr1) de stockage dudit réservoir (34) étant sensiblement plus élevée que la pression (Pr2) de déstockage dudit réservoir (34) ; et la différence de pression (ΔP) entre la pression (Pr1) de stockage et la pression (Pr2) de déstockage de chaque réservoir (34) individuel de récupération étant au moins égale à 7% de la pression (Pmax) maximale de fluide de soufflage.

2. Procédé selon la revendication précédente, **caractérisé en ce qu'**il comporte :
- plusieurs étapes (E2-1A à E2-1 E) successives de récupération du fluide de soufflage dudit récipient (12C) fini par remplissage successif de réservoirs (34A à 34E) distincts dont chacun est associé à l'une des étapes (E2-1A à E2-1 E) de récupération ;
- autant d'étapes (E1-2E à E1-2A) successives d'utilisation du fluide de soufflage récupéré par injection successive du fluide de soufflage contenu dans chacun desdits réservoirs (34A à 34E) dans le récipient (12B) en cours de formage suivant.

3. Procédé selon la revendication précédente, **caractérisé en ce que** la première des étapes d'utilisation (E1-2E) est déclenchée après la fin de la dernière des étapes (E2-1 E) de récupération, et **en ce que** les réservoirs (34A à 34E) sont utilisés successivement par chaque étape (E1-2E à E1-2A) d'utilisation dans l'ordre inverse de leur remplissage au cours des étapes (E2-1 A à E2-1 E) de récupération.

4. Procédé selon la revendication précédente, **caractérisé en ce qu'**à l'issue de chaque étape (E2-1A à E2-1 D) de récupération, la pression de stockage (Pr1 A à Pr1 D) du réservoir (34A à 34d) individuel de récupération associé correspond à la pression de fluide dans le récipient (12C) fini au début de l'étape (E2-1 B à E2-1 E) de récupération directement suivante.

5. Procédé selon l'une quelconque des revendications 3 ou 4, **caractérisé en ce qu'**à l'issue de chaque étape (E1-2E à E1-2B) d'utilisation, la pression (Pr2E à Pr2b) de déstockage du réservoir (34E à 34B) individuel de récupération associé correspond à la pression de fluide dans le récipient (12B) en cours de formage au début de l'étape (E1-2D à E1-2A) d'utilisation directement suivante.

6. Procédé selon l'une quelconque des revendications précédentes, **caractérisé en ce que** la pression (Pr1) de stockage de chaque réservoir (34) est plus élevée d'au moins 1 bar par rapport à la pression (Pr2) de déstockage dudit réservoir (34).

7. Procédé selon l'une quelconque des revendications précédentes, **caractérisé en ce que** chaque réservoir (34) alimente en fluide de soufflage une unique tuyère (22) d'un poste (10) de formage associé.

8. Procédé selon la revendication précédente, **caractérisé en ce que** chaque réservoir (34) est alimenté en fluide de soufflage uniquement par ladite tuyère (22).

9. Procédé selon l'une quelconque des revendications précédentes, **caractérisé en ce qu'**il comporte une étape intermédiaire d'augmentation de la pression du fluide de soufflage contenu dans au moins un réservoir (34) par des moyens (42, 44, 46, 48) d'augmentation de la pression, l'étape intermédiaire étant interposée entre l'étape de récupération et l'étape suivant d'utilisation associées audit réservoir.

10. Poste (10) de formage pour la mise en oeuvre du procédé selon l'une quelconque des revendications 7 à 9, pour former un récipient (12C) fini d'un volume déterminé à partir d'une préforme (12A) plus petite, le poste (10) de formage comportant :
- une tuyère (22) de formage qui est destinée à raccorder au moins une source (26) commandée de fluide de soufflage comprimé à la pression (Pmax) maximale avec la préforme (12A), la tuyère (22) présentant un volume mort déterminé ;
- au moins un réservoir (34) qui est raccordé en dérivation avec la tuyère (22) par l'intermédiaire d'une vanne (36) commandée de récupération associée ;
**caractérisé en ce que** chaque réservoir (34) est destiné à la mise en oeuvre des étapes associées de récupération et d'utilisation, et **en ce que** chaque réservoir (34) présente un volume non nul qui est inférieure ou égal à environ cinq fois la somme du volume mort et du volume du récipient (12C) fini.

11. Poste (10) de formage selon la revendication précédente, **caractérisé en ce que** le au moins un réservoir (34) est agencé à une distance de moins d'un mètre de la tuyère (22) associée, de préférence moins de 50 centimètres, idéalement moins de 20 cm.

12. Poste (10) de formage selon la revendication précédente, **caractérisé en ce qu'**au moins un réservoir (34) est intégré à un support (24) de la tuyère (22).

13. Poste (10) de formage selon la revendication précédente, **caractérisé en ce que** chaque réservoir (34) et son raccordement à la tuyère (22) sont réalisés de manière à favoriser l'écoulement du fluide sans perte d'énergie dans les deux sens.

14. Poste (10) de formage selon l'une quelconque des revendications 10 à 13, **caractérisé en ce qu'**au moins un réservoir (34) présente un volume variable.

15. Poste (10) de formage selon l'une quelconque des revendications 10 à 14, **caractérisé en ce que** le réservoir (34) comporte des moyens (42, 44, 46, 48) pour augmenter la pression du fluide de soufflage entre la première étape de récupération et la deuxième étape d'utilisation.

16. Poste (10) de formage selon la revendication précédente, **caractérisé en ce que** le réservoir (34) comporte des moyens (44) de chauffage du fluide formage qu'il contient afin d'en augmenter la pression par élévation de la température.

17. Poste (10) de formage selon l'une quelconque des revendications 15 ou 16, **caractérisé en ce que** le réservoir (34) comporte des moyens (46, 48) d'injection d'un fluide supplémentaire sous pression issu d'une source (46) de pression extérieure audit poste (10).

## Patentansprüche

1. Verfahren zum Serienformen, insbesondere durch Blasen oder durch Streckblasen, von Behältern (12C) aus thermoplastischem Material durch Einspritzen eines unter Druck stehenden Blasfluids in vorgeheizte Vorformlinge (12A) bis zu einem maximalen Druck (Pmax), um jeden Vorformling (12A) mit dem Behälter (12C) in Übereinstimmung zu bringen, wobei das Verfahren Folgendes aufweist:
- mindestens einen Schritt (E2-1) zur Rückgewinnung von unter Druck stehendem Blasfluid, welches in einem nach Abschluss seines Formens beendeten Behälter (12C) enthalten ist, durch Auffüllen eines Tanks (34) bis zu einem ersten Gleichgewichtsdruck zwischen dem Tank (34) und dem beendeten Behälter (12C), dem so genannten Speicherdruck (Pr1);
- mindestens einen späteren Schritt (E1-2) zur Verwendung des rückgewonnenen Blasfluids durch Einspritzen des in dem Tank (34) enthaltenen Blasfluids in einen im Formen befindlichen Behälter (12B) bis zur Erzielung eines zweiten Gleichgewichtsdrucks zwischen dem Tank (34) und dem Behälter (12B), dem so genannten Lieferdruck (Pr2);
wobei der Speicherdruck (Pr1) des Tanks (34) im Wesentlichen höher als der Lieferdruck (Pr2) des Tanks (34) ist; und
wobei die Druckdifferenz (ΔP) zwischen dem Speicherdruck (Pr1) und dem Lieferdruck (Pr2) von jedem individuellen Tank (34) zur Rückgewinnung mindestens gleich 7% des maximalen Drucks (Pmax) des Blasfluids ist.

2. Verfahren nach dem vorhergehenden Anspruch, **dadurch gekennzeichnet, dass** es Folgendes aufweist:
- mehrere aufeinander folgende Schritte (E2-1A bis E2-1E) zur Rückgewinnung des Blasfluids von dem beendeten Behälter (12C) durch aufeinanderfolgendes Auffüllen von verschiedenen Tanks (34A bis 34E), von denen jeder mit einem der Schritte (E2-1A bis E2-1E) zur Rückgewinnung verknüpft ist;
- ebenso viele aufeinander folgende Schritte (E1-2E bis E1-2A) zur Verwendung des rückgewonnenen Blasfluids durch Einspritzen des in den Tanks (34A bis 34E) enthaltenen Blasfluids in den folgenden, im Formprozess befindlichen Behälter (12B).

3. Verfahren nach dem vorhergehenden Anspruch, **dadurch gekennzeichnet, dass** der erste der Schritte zur Verwendung (E1-2E) nach dem Ende des letzten der Schritte (E2-1E) zur Rückgewinnung ausgelöst wird, und dass die Tanks (34A bis 34E) nacheinander durch jeden Schritt (E1-2E bis E1-2A) zur Verwendung in umgekehrter Reihenfolge ihres Auffüllens im Verlauf der Schritte (E2-1A bis E2-1E) zur Rückgewinnung verwendet werden.

4. Verfahren nach dem vorhergehenden Anspruch, **dadurch gekennzeichnet, dass** am Ende jedes Schritts (E2-1A bis E2-1D) zur Rückgewinnung der Speicherdruck (Pr1A bis Pr1D) des zugeordneten, individuellen Tanks (34A bis 34d) zur Rückgewinnung dem Fluiddruck in dem beendeten Behälter (12C) zu Beginn des direkt folgenden Schritts (E2-1B bis E2-1E) zur Rückgewinnung entspricht.

5. Verfahren nach einem der Ansprüche 3 oder 4, **dadurch gekennzeichnet, dass** am Ende jedes Schritts (E1-2E bis E1-2B) zur Verwendung der Lieferdruck (Pr2E bis Pr2b) des zugeordneten, individuellen Tanks (34E bis 34B) zur Rückgewinnung dem Fluiddruck in dem im Formprozess befindlichen Behälter (12B) zu Beginn des direkt folgenden Schritts (E1-2D bis E1-2A) zur Verwendung entspricht.

6. Verfahren nach einem der vorhergehenden Ansprüche, **dadurch gekennzeichnet, dass** der Speicherdruck (Pr1) von jedem Tank (34) höher als mindestens 1 bar in Bezug auf den Lieferdruck (Pr2) des Tanks (34) ist.

7. Verfahren nach einem der vorhergehenden Ansprüche, **dadurch gekennzeichnet, dass** jeder Tank (34) ein einziges Rohr (22) einer zugeordneten Formstation (10) mit Blasfluid versorgt.

8. Verfahren nach dem vorhergehenden Anspruch, **dadurch gekennzeichnet, dass** jeder Tank (34) einzig und allein über das Rohr (22) mit Blasfluid versorgt wird.

9. Verfahren nach einem der vorhergehenden Ansprüche, **dadurch gekennzeichnet, dass** es einen Zwischenschritt zum Erhöhen des Drucks des in dem mindestens einen Tank (34) enthaltenen Blasfluids durch Mittel (42, 44, 46, 48) zur Erhöhung des Drucks aufweist, wobei der Zwischenschritt zwischen den Schritt zur Rückgewinnung und den folgenden Schritt zur Verwendung, welche dem Tank zugeordnet sind, zwischengeschaltet ist.

10. Formstation (10) zur Durchführung des Verfahrens nach einem der Ansprüche 7 bis 9, um einen aus einem kleineren Vorformling (12A) mit einem vorgegebenen Volumen beendeten Behälter (12C) zu formen, wobei die Formstation (10) Folgendes aufweist:
- ein Formrohr (22), welches dafür vorgesehen ist, eine gesteuerte Quelle (26) mit Blasfluid, welches auf den maximalen Druck (Pmax) verdichtet ist, mit dem Vorformling (12A) zu verbinden, wobei das Rohr (22) ein vorgegebenes Totvolumen aufweist;
- mindestens einen Tank (34), welcher über einen Abzweig mit dem Rohr (22) mittels eines Ventils (36), welcher durch zugeordnete Rückgewinnung gesteuert wird, verbunden ist;
**dadurch gekennzeichnet, dass** jeder Tank (34) für die Durchführung der mit der Rückgewinnung und Verwendung verknüpften Schritte vorgesehen ist, und dass jeder Tank (34) ein Volumen ungleich Null aufweist, welches kleiner oder gleich ungefähr fünf Mal der Summe aus dem Totvolumen und dem Volumen des beendeten Behälters (12C) ist.

11. Formstation (10) nach dem vorhergehenden Anspruch, **dadurch gekennzeichnet, dass** der mindestens eine Tank (34) in einem Abstand von weniger als einem Meter, vorzugsweise weniger als 50 Zentimeter, Idealerweise weniger als 20 cm, von dem zugeordneten Rohr (22) angeordnet ist.

12. Formstation (10) nach dem vorhergehenden Anspruch, **dadurch gekennzeichnet, dass** der mindestens eine Tank (34) in einem Träger (24) des Rohrs (22) integriert ist.

13. Formstation (10) nach dem vorhergehenden Anspruch, **dadurch gekennzeichnet, dass** jeder Tank (34) und seine Verbindung mit dem Rohr (22) so ausgeführt sind, dass der Durchfluss des Fluids ohne Energieverlust in den beiden Richtungen begünstigt ist.

14. Formstation (10) nach einem der Ansprüche 10 bis 13, **dadurch gekennzeichnet, dass** mindestens ein Tank (34) ein variables Volumen aufweist.

15. Formstation (10) nach einem der Ansprüche 10 bis 14, **dadurch gekennzeichnet, dass** der Tank (34) Mittel (42, 44, 46, 48) aufweist, um den Druck des Blasfluids zwischen dem ersten Schritt zur Rückgewinnung und dem zweiten Schritt zur Verwendung zu erhöhen.

16. Formstation (10) nach dem vorhergehenden Anspruch, **dadurch gekennzeichnet, dass** der Tank (34) Mittel (44) zum Erwärmen des Formfluids, welches er enthält, aufweist, um den Druck durch Erhöhung der Temperatur zu erhöhen.

17. Formstation (10) nach einem der Ansprüche 15 oder 16, **dadurch gekennzeichnet, dass** der Tank (34) Mittel (46, 48) zum Einspritzen eines zusätzlichen, unter Druck stehenden Fluids aus einer Druckquelle (46) außerhalb der Station (10) aufweist.

## Claims

1. Method for the series-production, notably by blowmoulding or stretch-blowmoulding, of thermoplastic containers (12C) by injecting a pressurized blow-moulding fluid into preheated preforms (12A) up to a maximum pressure (Pmax) so as to shape each preform (12A) into a container (12C), the method comprising:
- at least a step (E2-1) of recovering pressurized blow-moulding fluid contained in a finished container (12C) at the end of the forming thereof by filling a vessel (34) to a first pressure of equilibrium between the vessel (34) and the finished container (12C), referred to as the storage pressure (Pr1);
- at least a later step (E1-2) of using the recovered blow-moulding fluid by injecting the blow-moulding fluid contained in the vessel (34) into a container (12B) in the process of being formed, until a second pressure of equilibrium between the vessel (34) and the container (12B), referred to as the release pressure (Pr2), is obtained;
the storage pressure (Pr1) of the said vessel (34) being appreciably higher than the release pressure (Pr2) of the said vessel (34); and the difference in pressure (ΔP) between the storage pressure (Pr1) and the release pressure (Pr2) of each individual recovery vessel (34) being at least equal to 7% of the maximum blow-moulding fluid pressure (Pmax).

2. Method according to the preceding claim, **characterized in that** it comprises:
- several successive steps (E2-1A to E2-1E) of recovering the blow-moulding fluid from the said finished container (12C) by successive filling of distinct vessels (34A to 34E) each of which is associated with one of the recovery steps (E2-1A to E2-1E);
- as many successive steps (E1-2E to E1-2A) of using the recovered blow-moulding fluid by successive injection of the blow-moulding fluid contained in each of the said vessels (34A to 34E) into the next container (12B) in the process of being formed.

3. Method according to the preceding claim, **characterized in that** the first of the use steps (E1-2E) is triggered after the end of the last of the recovery steps (E2-1E), and **in that** the vessels (34A to 34E) are used in succession by each use step (E1-2E to E1-2A) in the reverse order to the order in which they were filled during the recovery steps (E2-1A to E2-1E).

4. Method according to the preceding claim, **characterized in that**, at the end of each recovery step (E2-1A to E2-1D) the storage pressure (Pr1A to Pr1D) of the associated individual recovery vessel (34A to 34d) corresponds to the fluid pressure in the finished container (12C) at the start of the immediately next recovery step (E2-1B to E2-1E).

5. Method according to either one of Claims 3 and 4, **characterized in that**, at the end of each use step (E1-2E to E1-2B) the release pressure (Pr2E to Pr2b) of the associated individual recovery vessel (34E to 34B) corresponds to the fluid pressure in the container (12B) in the process of being formed at the start of the immediately next use step (E1-2D to E1-2A).

6. Method according to any one of the preceding claims, **characterized in that** the storage pressure (Pr1) of each vessel (34) is at least 1 bar higher than the release pressure (Pr2) of the said vessel (34).

7. Method according to any one of the preceding claims, **characterized in that** each vessel (34) feeds blow-moulding fluid to a single nozzle (22) of an associated forming station (10).

8. Method according to the preceding claim, **characterized in that** each vessel (34) is fed with blow-moulding fluid only by the said nozzle (22).

9. Method according to any one of the preceding claims, **characterized in that** it comprises an intermediate step of increasing the pressure of the blow-moulding fluid contained in at least one vessel (34) using pressure increasing means (42, 44, 46, 48), the intermediate step being interposed between the recovery step and the next use step which are associated with the said vessel.

10. Forming station (10) for implementing the method according to any one of Claims 7 to 9, for forming a finished container (12C) of determined volume from a smaller preform (12A), the forming station (10) comprising:
- a forming nozzle (22) which is intended to connect at least one controlled source (26) of blow-moulding fluid compressed to the maximum pressure (Pmax) to the preform (12A), the nozzle (22) having a determined dead volume;
- at least one vessel (34) which is connected as a tapping of the nozzle (22) by means of an associated controlled recovery valve (36);
**characterized in that** each vessel (34) is intended for the implementation of the associated recovery and use steps, and **in that** each vessel (34) has a non-zero volume which is less than or equal to approximately five times the sum of the dead volume and of the volume of the finished container (12C).

11. Forming station (10) according to the preceding claim, **characterized in that** the at least one vessel (34) is arranged a distance of under one metre away from the associated nozzle (22), preferably under 50 centimetres or ideally under 20 cm away.

12. Forming station (10) according to the preceding claim, **characterized in that** at least one vessel (34) is incorporated into a support (24) of the nozzle (22).

13. Forming station (10) according to the preceding claim, **characterized in that** each vessel (34) and its connection to the nozzle (22) are produced in such a way as to encourage the fluid to flow in both directions without loss of energy.

14. Forming station (10) according to any one of Claims 10 to 13, **characterized in that** at least one vessel (34) has a variable volume.

15. Forming station (10) according to any one of Claims 10 to 14, **characterized in that** the vessel (34) comprises means (42, 44, 46, 48) for increasing the pressure of the blow-moulding fluid between the recovery first step and the use second step.

16. Forming station (10) according to the preceding claim, **characterized in that** the vessel (34) comprises means (44) of heating the forming fluid that it contains so as to increase its pressure by raising its temperature.

17. Forming station (10) according to either one of Claims 15 and 16, **characterized in that** the vessel (34) comprises means (46, 48) of injecting an additional pressurized fluid from a pressure source (46) external to the said station (10).
